# EUROPEAN PATENT APPLICATION

(11) **EP 2 039 822 A1**
(43) Date of publication of application: **25.03.2009**
(21) Application number: 07116870.2
(22) Date of filing: 20.09.2007
(51) Int. Cl.: D06F 39/04, D06F 31/00

(54) **A washing system and washing method**

(71) Applicant: Wientjens Technology B.V., 6596 DH Milsbeek (NL)
(72) Inventor: Wientjens, Gerardus LIR Beheer B.V., 6596 MK Milsbeek (NL)
(74) Representative: DeltaPatents B.V.

(57) **Abstract**

A washing system provided with a washing container (3) for washing laundry and further provided with a heating device (5) for heating water in the washing container. In order to achieve a high energy efficiency the washing container is provided with a water outlet ((3a), a water inlet (3b) and an external connection (7) extending between the water outlet and the water inlet, wherein a pump unit (11) is provided for pumping water from the water outlet to the water inlet through the external connection, and wherein the heating device comprises a gas burning device for heating a heat exchange portion (9c) of said connection.

## Description

### FIELD OF THE INVENTION

The invention relates to washing system provided with a washing container for washing laundry and further provided with a heating device for heating water in the washing container.

### BACKGROUND OF THE INVENTION

Energy costs are becoming increasingly important factors in laundries and laundry processes. Due to the growing energy-consciousness reduction of energy consumption in laundry processes has a high priority. Laundry systems are industrial systems comprising washing systems for washing dirty sheets, tablecloths and other linen, from e.g. hotels and hospitals as well as dirty clothing and other textiles. Laundry systems further comprise moisture extracting units, such as ironers, dryers or irons, for extracting moisture from the washed lines and textiles.
One of the laundry processes where a substantial part of the total energy consumption within a laundry system takes place is the washing process itself, because the water used in at least a main wash program has to be heated up to a high temperature. In the washing process of e.g. hospital linen a water temperature of about 90 degrees Celsius is required for disinfection reasons.
In known washing systems it is common and standard to reach a required or desired water temperature by injecting hot steam into the washing machine. Due to condensation the steam changes into water becoming part of the washing water, resulting in energy transfer from the steam to the washing water and thus to an increase of the water temperature. However, a drawback of this known heating method is the requirement of an in-house steam boiler and the required piping for supplying the steam to the washing machine. As a rule such a boiler is part of a central energy supply unit of a laundry system, whereby in general the piping is extensive, complicated and has to be maintained and checked regularly. Moreover, such an arrangement of boiler and piping suffers from energy losses.

### SUMMARY OF THE INVENTION

It is an object of the invention to provide an energy-saving washing system.
This object is achieved by the washing system according to the invention, which system is provided with a washing container for washing laundry and further provided with a heating device for heating water in the washing container, wherein the washing container is provided with a water outlet, a water inlet and an external connection extending between the water outlet and the water inlet, wherein a pump unit is provided for pumping water from the water outlet to the water inlet through the connection, and wherein the heating device comprises a gas burning device for heating a heat exchange portion of the connection.
In the washing system according to the invention the washing water is directly heated by burning gas, i.e without intermediate steps and/or processes. Due to this feature the energy efficiency is substantially increased with regard to the energy efficiency of the heating devices in existing washing systems. A further important advantage of the washing system according to the invention is that the heating device for heating the wash water need not to be an integral part of a central energy supply system of a laundry, but is preferably a separate heating unit which can be compact of construction. Thus, heating wash water is independent from other energy supply sources of a laundry. Another important advantage is that the constancy of the washing process is increased with regard to this factor in known washing processes because the water wash volume is more stabile as no steam condensate is added.

In a preferred embodiment of the washing system according to the invention the washing container comprises a first washing compartment for washing laundry with water having a first temperature and a second washing compartment for washing laundry with water having a second temperature being higher than the first temperature, wherein a conveying device is provided for conveying at least laundry from the first washing compartment to the second washing compartment, wherein the second washing compartment is provided with the water outlet and the water inlet. In the first washing compartment a pre-wash process may be executed on a temperature of e.g. 30 degrees Celsius, while in the second compartment a main wash process may be executed on a temperature of e.g. 90 degrees Celsius. A third compartment may be provided for executing a rinsing process, at e.g. room temperature. The conveying device may be a device known *per se* and conveys during use in general a certain amount of water together with the wash.

In a preferred embodiment of the washing system according to the invention the heat exchange portion of the tube is a helical tube portion surrounding an inner space, wherein the gas burning device is directed to the inner space. In this way an efficient heating arrangement is achieved.

In a preferred embodiment of the washing system according to the invention a water filter is provided in the external connection. Due to this feature textile fibres and other contaminations can be easily removed from the wash water without executing an separate or additional process step.

The invention also relates to a washing method in which use is made of a washing container for washing laundry and use is made of a heating device for heating the water.

In the washing method according to the invention water is successively pumped out of the washing container, heated by a gas jet produced by the heating device and pumped back to the water container, wherein a gas burning device is used as the heating device. The washing method according to the invention has technical effects and advantages similar to those as described in the foregoing elucidation of the washing system according to the invention.

In a preferred variant of the washing method according to the invention use is made of a first washing compartment for washing laundry with water having a first temperature and use is made of a second washing compartment for washing laundry with water having a second temperature being higher than the first temperature, wherein at least laundry is conveyed from the first washing compartment to the second washing compartment, wherein water successively is pumped out of the second washing compartment, heated by the gas jet and pumped back to the second washing compartment.

In a preferred variant of the washing method according to the invention the pumped-out water is lead through a heat exchanger which is directly heated by the gas jet.

In a practical variant of the washing method according to the invention the heat exchanger comprises a helical tube portion surrounding an inner space, wherein the gas jet is directed to the inner the pumped-out water is lead through a helical tube portion surrounding an inner space is used, wherein the gas jet is directed to the inner space.

In a preferred variant of the washing method according to the invention the pumped-out water is lead through a water filter.

These and other aspects of the invention are apparent from and will be elucidated with reference to the examples described hereinafter.

### BRIEF DESCRIPTION OF THE DRAWINGS

Figure 1 is a schematic disclosure of an embodiment of the washing system according to the invention.
Figur 2 is a schematic disclosure of an example of a gas heater system applied into the washing system according to the invention.

### DETAILED DESCRIPTION

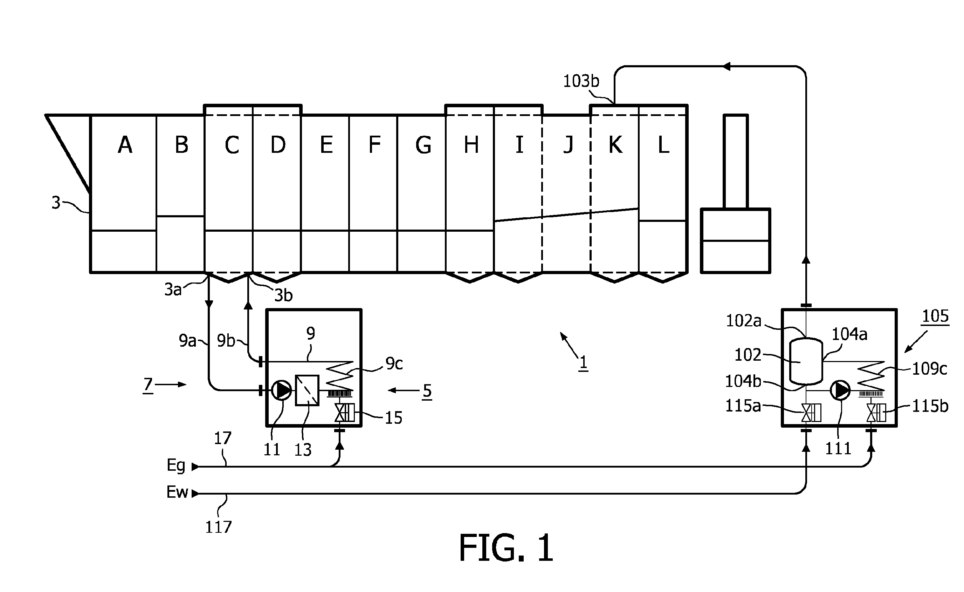

The washing system depicted in Figure 1 provided with a washing machine 1 including a washing container 3 for washing laundry and is further provided with a heating device 5 for heating water meant for use in the washing container 1. In the present embodiment the washing container 3 has several chambers or areas, indicated by the letters A to L in Figure 1. The chambers A and B form a first washing compartment A-B meant for the pre-wash. The chambers C to H form a second washing compartment C-H meant for the main wash cycle. The chambers I to K form a compartment I-K meant for rinsing. The chamber L is meant for neutralization. The washing machine 1 is provided with a conveying device, which may be of a construction known *per se*, e.g. a conveying device comprising an archimedes'screw,
for conveying laundry from the first washing compartment to the second washing compartment and the further compartments. During such conveyance some water is also replaced from a compartment to a next compartment, thus also from the first compartment A-B to the second washing compartment C-H.
The second washing compartment of the washing container 3, particularly the chamber C, is provided with a water outlet 3a and a water inlet 3b, wherein an external connection 7, being a pipe connection, extends between the water outlet 3a and the water inlet 3b. The connection 7 comprises a piping 9 having a drainage pipe portion 9a, a supply pipe portion 9b and a heat exchange pipe portion 9c extending between the pipe portions 9a and 9b. The drainage pipe portion 9a runs from the water outlet 3a, while the supply pipe portion 9b ends at the water inlet 3b. The heater 5 comprises a gas burning device for heating the heat exchange pipe portion 9c. The heater 5, also called gas heater 5, and the heat exchange pipe portion 9c form together a gas heater system. In order to pump water from the water outlet 3a through the gas heater system to the water inlet 3b, a pump unit 11 is mounted in the piping 9. A water filter 13 is provided in the piping 9 in order to filter the water coming from the water outlet 3a. A tube 17 is via a valve unit 15 connected to the piping 9 for letting in gas coming from a gas source Eg.
During use of the above described embodiment of the washing device according to the invention water having a relatively low temperature, e.g. 30 degrees Celsius, moves from the first washing compartment A-B to the second washing compartment C-H. Because of the fact that in the second washing compartment C-H a considerably higher water temperature, usually between 60 and 90 degrees Celsius, is required the water used in the second washing compartment C-H has to be heated. This heating is obtained in an efficient way by gas heating using the gas heater system as explained above.

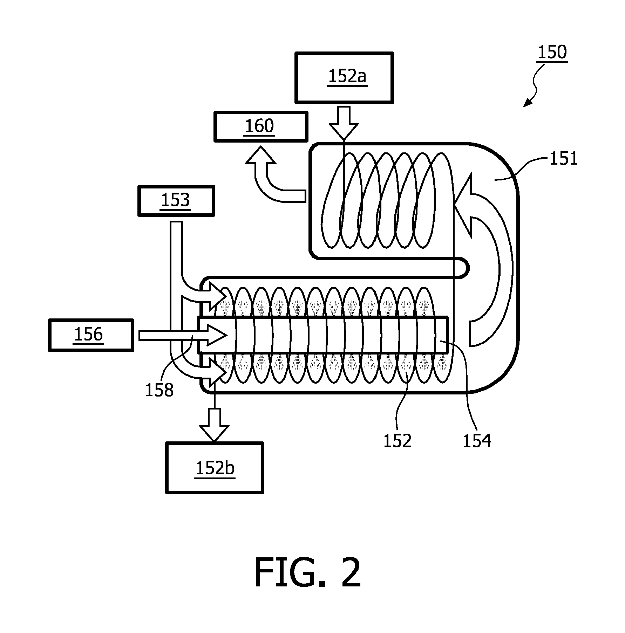

In Figure 2 a suitable gas heater system is depicted. This heater system, which has the reference numeral 150, is provided with an enclosure 151 accommodating a heat exchange pipe 152 having one or more portions having the shape of a helical tube. This helical tube portion 152 surrounds an inner space 154. The gas heater system 150 is further provided with an air entry 153 and a gas burning device 156 for generating a gas flame or jet 158 in the inner space 154. The helical tube portion 152 has a cold water manifold 152a for connecting to a drainage pipe portion, e.g. similar to the drainage pipe portion 9a in Fig.1, and a hot water manifold 152b for connecting to a supply pipe portion, e.g. similar to the supply pipe portion 9b in Fig.1. The gas heater system 150 is also provided with a gas exhaust 160.

With reference to Figure 1, it is noted that the washing machine 1 is preferably provided with a further gas heater system for heating water to be used in the rinsing process, thus in the compartment I-K. In the depicted example a gas heater 105, similar to the gas heater 5, and a heat exchange pipe portion 109c, similar to the heat exchange pipe portion 9c, is provided. The gas heater 105 and the heat exchange pipe portion 109c form together a gas heater system. The compartment I-K, particularly the room K, is provided with a water inlet 103b, which is in communication with a water let-out opening 102a of a water boiler 102. The water boiler 102 has two water let-in openings, viz. a first water let-in opening 104a for receiving water heated by the gas heater 105 and a second water let-in opening 104b connected via a valve unit 115a to a tube 117 for receiving water delivered from a water source Ew. The heat exchange pipe portion 109c is connected via a valve unit 115b for receiving gas from the source Eg. A pump unit 111 is mounted in the applied piping for pumping water through the gas heater 105 and to the water inlet 103b.

While the invention has been illustrated and described in detail in the drawings and foregoing description, illustration and description are to be considered illustrative or exemplary and not restrictive. The invention is not limited to the disclosed embodiments, for example, it is possible to apply several kinds of gas burning devices and heat exchange pipe portions. Other variations to the disclosed embodiments can be understood and effected by the skilled person in practicing the claimed invention, from a study of the drawings, the description and the claims. Particular it is within the scope of the invention to apply the measures taken by the inventor in a washing machine with more or less compartments than applied in the depicted washing machine. In this context it is emphasized that the washing system according to the invention includes both industrial embodiments and domestic embodiments. It is further noted that the washing system according to the invention and all its components can be made by applying processes and materials known per se. In the claims and the description the word "comprising" does not exclude other elements, and the indefinite article "a" or "an" does not exclude a plurality. Any reference sign in the Claims should not be construed as limiting the scope.

## Claims

1. A washing system provided with a washing container for washing laundry and further provided with a heating device for heating water in the washing container, wherein the washing container is provided with a water outlet and a water inlet, wherein an external connection extends between the water outlet and the water inlet, wherein a pump unit is provided for pumping water from the water outlet to the water inlet through the external connection, and wherein the heating device comprises a gas burning device for heating a heat exchange portion of the external connection.

2. A washing system as claimed in claim 1, wherein the washing container comprises a first washing compartment for washing laundry with water having a first temperature and a second washing compartment for washing laundry with water having a second temperature being higher than the first temperature, wherein a conveying device is provided for conveying at least laundry from the first washing compartment to the second washing compartment, wherein the second washing compartment is provided with the water outlet and the water inlet.

3. A washing system as claimed in claim 1 or 2, wherein the heat exchange portion is a helical tube portion surrounding an inner space, wherein a gas jet produced by the gas burning device, during operation, is directed to the inner space.

4. A washing system as claimed in claim 1, 2 or 3, wherein a water filter is provided in the external connection.

5. A washing method in which use is made of a washing container for washing laundry and use is made of a heating device for heating the water, wherein water is successively pumped out of the washing container, heated by a gas jet produced by the heating device and pumped back to the water container, wherein a gas burning device is used as the heating device.

6. A washing method as claimed in claim 5, wherein use is made of a first washing compartment for washing laundry with water having a first temperature and use is made of a second washing compartment for washing laundry with water having a second temperature being higher than the first temperature, wherein at least laundry is conveyed from the first washing compartment to the second washing compartment, wherein water successively is pumped out of the second washing compartment, heated by the gas jet and pumped back to the second washing compartment.

7. A washing method as claimed in claim 5 or 6, wherein the pumped-out water is lead through a heat exchanger directly heated by the gas jet.

8. A washing method as claimed in claim 7, wherein the heat exchanger comprises a helical tube portion surrounding an inner space, wherein the gas jet is directed to the inner space.

9. A washing method as claimed in claim 5, 6, 7 or 8, wherein the pumped-out water is lead through a water filter.
